# EUROPEAN PATENT APPLICATION

(11) **EP 1 737 252 A1**
(43) Date of publication of application: **27.12.2006**
(21) Application number: 05300495.8
(22) Date of filing: 20.06.2005
(51) Int. Cl.: H04Q 3/00, H04M 7/00

(54) **Virtual private telephony network**

(71) Applicant: Hewlett-Packard Development Company, L.P., Houston, Texas 77070 (US)
(72) Inventor: Bouat, Sebastien, 38053, Grenoble Cedex 09 (FR)
(74) Representative: Franks, Adam Peter

(57) **Abstract**

According to one aspect of the present invention, there is provided Apparatus for providing a virtually private telephony network VPN within a telecommunication network, the VPN being comprised of a group of telephone subscriber numbers of the telecommunication network, the telecommunication network comprising a network routing element configured for sending requests to route calls made to a telephone number corresponding to a subscriber number of the group to the apparatus, the apparatus comprising: network interface operable to receive routing requests from the network routing element, a VPN routing logic module outside of the telecommunications network for resolving a routing request received from the network interface, and for supplying the network routing element, via the network interface, information sufficient for the network routing element to route the call.

## Description

The present invention relates generally to the field of telecommunications and, more particularly, to virtual private telephony networks.

Virtual private telephone networks (VPN) have becoming increasingly commonplace over recent years with a large percentage of businesses now using a VPN. A VPN enables, for example, a company having geographically distributed offices to provide an internal telephone network with a simple internal numbering plan, at relatively low cost. Such a telephony network is said to be 'virtually private' since many different companies share the same underlying infrastructure. In this way, companies can take advantage of the functionality of such a VPN, without having to own or lease expensive dedicated telephone lines to form completely private telephony network.

In addition to a simple internal numbering plan, such as abbreviated extension-based dialing (such as using internal telephone extensions to directly call anyone in the company irrespective of their geographical location), VPNs also provide many additional features and services. Such features and services may include call following, call forwarding, caller name presentation, so-called white and black lists, and the like.

It is well known that telecommunication systems are highly complex system and are considerably different to what may be considered 'conventional' information technology (IT) systems. Part of this complexity comes from the generally high availability requirement of telecommunication systems which requires telecommunications system to be extremely reliable, robust and fault tolerant. For example, many modern telecommunication systems provide almost continuous and faultless operation, with annual downtime being measured in minutes.

Telecommunication systems achieve such high availability though various measures. For example, such systems are typically designed with significant redundancy, no single point of failure, as well as active switchover systems capable of activating a standby system should an active system fail. Such systems use known reliable operating systems, and computer programs used in such systems are carefully designed and extensively tested. High security of such systems also helps prevent unauthorized access attempts, such as hacking, from taking place.

IT systems, on the other hand, are generally less complex in nature and are typically much less reliable than telecommunication systems. For example, it is common for general purpose personal computers running commonly available operating systems to experience crashes requiring a re-booting of the computer on a regular basis. Additionally access to IT systems is generally relatively easy, with access often being available remotely via the Internet or other remote access means making such systems less secure and prone to hacking or other unauthorized access. A further problem is the difference in skill set between IT specialists and telecommunication network specialists, the former being unlikely to understand the complexities of call routing through such networks.

Due to the business critical nature of telecommunications systems, traditional VPNs were developed using extensively conventional telecommunication systems. However, one essential feature of a VPN is that it must be sufficiently customizable to allow a business to adapt the VPN to suit specific business needs. For example, a VPN must allow new telephone lines to be installed, for example when a new employee joins the company, and for the new telephone line to be assigned an abbreviated dialing number (extension number). The VPN system may also provide the name of the called party on a caller's telephone, and thus the VPN system needs to have a database, or at least access to a database, containing information matching extension numbers with employee names.

Conventional VPN systems enable such customization through the use of IT computer server connected to the VPN system. In this way, a VPN administrator having knowledge of IT systems can administer and manage the VPN system without requiring knowledge of telecommunication systems. However, since such customization is largely limited to providing data in a predetermined format to a telecommunication system, the scope of customization is somewhat limited. Should more extensive customization or advanced functionality be required this can generally only be achieved through modification of the telecommunication systems implementing the VPN system.

One solution to this problem is provided by the Parlay Group in the form of OSA/Parlay. Parlay enables integration of telecom networks with IT systems through an open application programming interface (API). Through use of Parlay APls, IT system programmers can access functionality provided by telecom networks thereby opening up access to telecom network functionality to IT systems. However, Parlay still requires IT system programmers to have extensive knowledge of how those underlying telecom systems work.

However, although Parlay does provide advantages over conventional telecom networks, a telecom network using Parlay relies extensively on IT systems for performing what may be considered to be conventional telecom network tasks, such as call state machine handling, and the like. Accordingly, if a problem occurs in the IT systems, which, as mentioned above, are unlikely to be high-availability systems, operation of the VPN could fail.

Accordingly, one aim of the present invention to overcome, or at least alleviate, at least some of the above-mentioned problems.

According to a first aspect of the present invention, there is provided apparatus for providing a virtually private telephony network VPN within a telecommunication network, the VPN being comprised of a group of telephone subscriber numbers of the telecommunication network and the telecommunication network comprising a network routing element configured for sending requests to route calls made to a telephone number corresponding to a subscriber number of the group to the apparatus. The apparatus comprises a network interface operable to receive routing requests from the network routing element, a VPN routing logic module outside of the telecommunications network for resolving a routing request received from the network interface, and for supplying the network routing element, via the network interface, information sufficient for the network routing element to route the call.

Advantageously, such an apparatus provides an improved VPN system which overcomes many problems of prior art VPN systems. For instance, such an apparatus enables a non-telecommunication network skilled IT specialist to administer and configure a VPN system, and to take advantage of the flexibility offered by IT systems to provide advanced VPN functionality in a high personalized and dynamic manner. At the same time, essential telecommunication functionality is maintained in the telecommunication network enabling advantage to be taken of the inherent stability and security of telecommunication networks to provide a VPN system which is both stable, secure and highly adaptable.

Suitably the VPN routing logic module is in an information technology IT system outside of the telecommunication network, in which case the apparatus further comprises a gateway for translating messages sent between the telecommunication network and the IT system.

Preferably the apparatus comprises a default routing module in the telecommunication network which is operable to provide routing information to the network interface in the event that the VPN routing logic module is unable to provide routing information.

Preferably, the default routing module is arranged to be periodically updated with routing information from the VPN routing module, to thereby provide at least a subset of the routing functionality of the VPN routing module in the event of the VPN routing module being unable to provide routing information.

Suitably, the apparatus further comprises a routing data database for providing routing data to the VPN routing logic module.

The apparatus may also comprise, either in addition to or as an alternative to a routing data database, a software application arranged to provide routing data to the VPN routing logic module.

Suitably the network interface is located within the telecommunication network.

The telecommunication network may be a signaling system 7 (SS7) based telecommunication network.

According to a second aspect of the present invention, there is provided a method of operating a virtually private telephony network VPN within a telecommunication network, the VPN being comprised of a group of telephone subscriber numbers of the telecommunication network, the telecommunication network comprising a network routing element arranged sending requests to route calls made to a telephone number corresponding to a subscriber number of the group to the apparatus. The method comprises receiving, via a network interface, routing requests from the network routing element, sending to a VPN routing logic module outside of the telecommunications network a routing request received from the network interface, and supplying, to the network routing element, via the network interface, information sufficient for the network routing element to route the call.

Suitably, where the VPN routing logic module is in an information technology IT system outside of the telecommunication network, the method further comprises translating messages sent between the telecommunication network and the IT system.

Preferably, the method further comprises determining whether the VPN routing logic is able to provide routing information, and where it is determined that it is not so able, sending the received routing request to a default routing module in the telecommunications network.

Suitably, the method further comprises periodically updating the default routing module with at least a subset of information from the VPN routing logic module.

Suitably, the method may further comprise the VPN routing logic module obtaining routing information from a routing data database.

Suitably, the method further comprises the VPN routing logic module obtaining routing information from a software application.

The method may be adapted for use for where the network interface is located within the telecommunication network.

The method may be adapted for use for where the telecommunication network is a signaling system 7 (SS7) based telecommunication network.

An embodiment of the present invention will now be described, by way of non-limiting example only, with reference to the following drawings, in which:
Figure 1 is a block diagram showing a simplified view of a conventional virtual private telecom network according to the prior art;

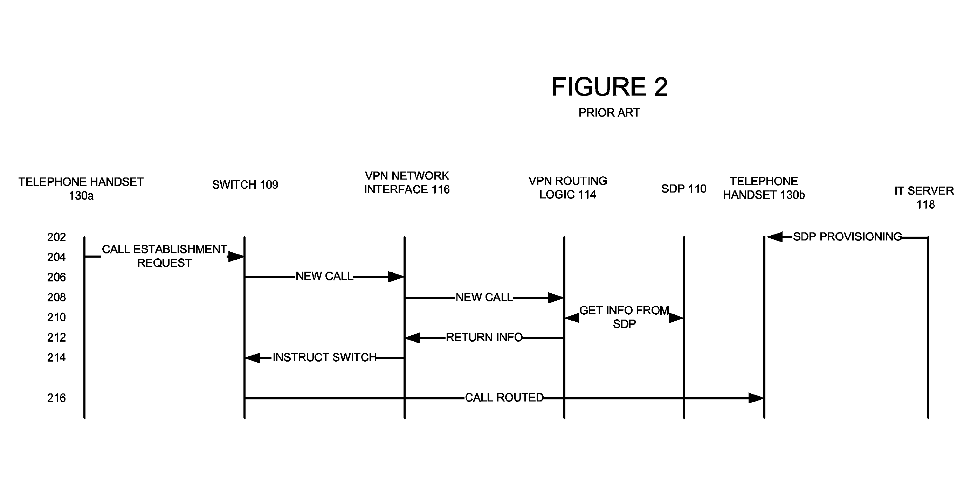

Figure 2 is a simplified event flow diagram showing events occurring between different elements of the system of Figure 1;
Figure 3 is block diagram showing a telephony system 300 which provides a virtual private telephony network 132 through use of OSA/PARLAY technology according to the prior art;

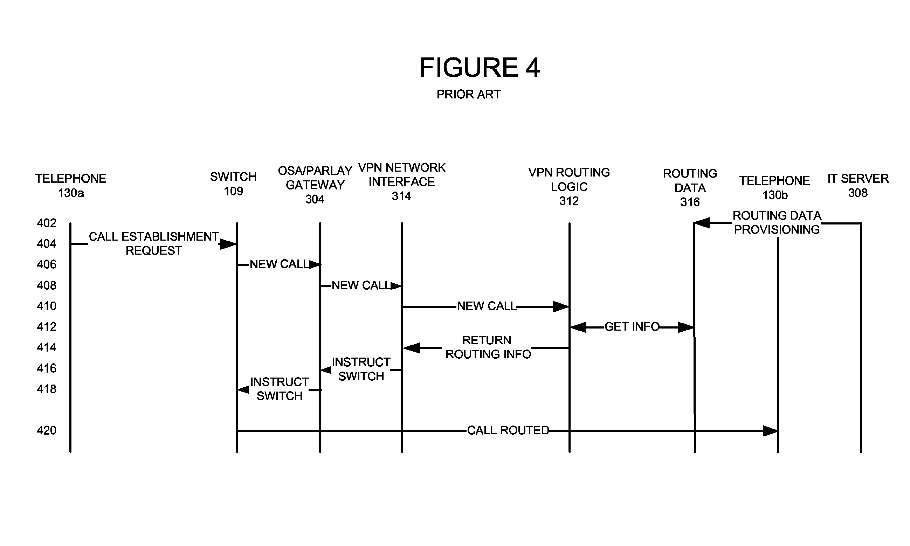

Figure 4 is a simplified event flow diagram showing events occurring between different elements of the system of Figure 3;
Figure 5 is a simplified block diagram of a telephony system according to an embodiment of the present invention; and
Figure 6 is a simplified event flow diagram showing events occurring between different elements of the system of Figure 5.

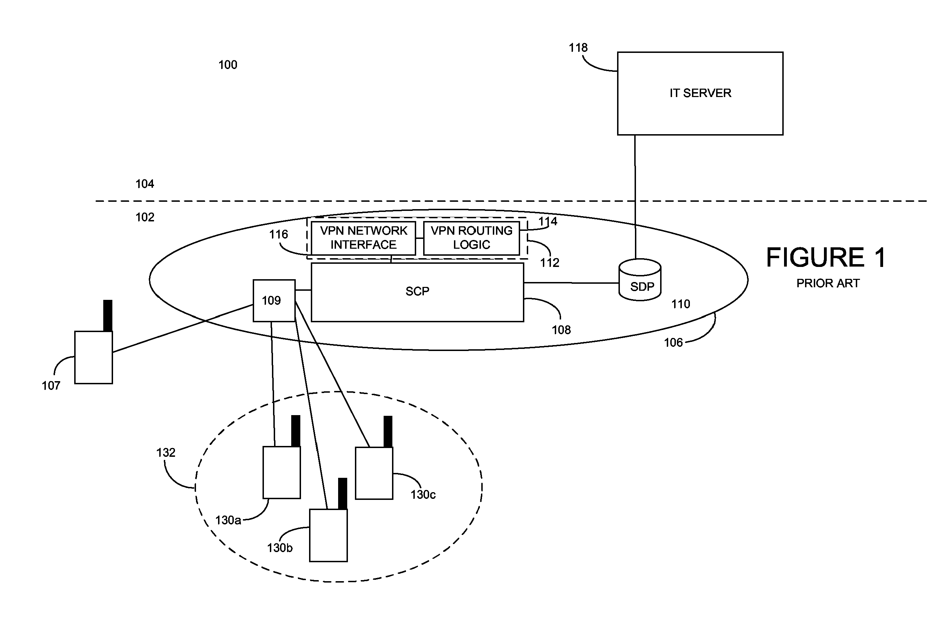

Figure 1 is a block diagram showing a simplified view of a conventional telecommunication system 102 providing a virtual private telecom network (VPN) 132 according to the prior art. The virtual private telecom network 132, which may represent, for example, the virtual private telephone network of a business, comprises a group of telephone subscriber numbers each assigned to a different telephone handset 130a, 130b and 130c. Each telephone handset may be either a fixed line or mobile telephone handset.

One service provided by the VPN 132 is abbreviated dialing, in which telephone handsets 130a, 130b and 130c in the VPN 132 may call each other using an abbreviated dialing scheme, or internal telephone extension numbers. For example, if the fully qualified telephone subscriber number of the handset 130a is +33479141001, either of the telephone handsets 130b and 130c may call the handset 130a by dialing, for example, just the last six digits of that number. Each of the telephone handsets 130a, 130b and 130c may also place and receive calls from outside of the VPN 132.

An additional service provided by the VPN 132 is caller name display which, for calls internal to the VPN 132, enables the name of the caller to be displayed on the called party's telephone handset.

The telephone handsets 130a, 130b and 130c are connected to the public telecommunications system 102 in a conventional manner, and it is for this reason that the group of telephone handsets 130a, 130b and 130c is said to form a virtually private network.

The functionality and services of the VPN 132 are provide by a VPN service 112 which comprises a VPN network interface 116 and VPN routing logic 114, in conjunction with routing data stored in an SDP 110, as is described in more detail below.

If a telephone call is made from a telephone handset 107 to the telephone handset 130a, the telephone handset 107 sends a call establishment request to a switch 109 in the network 106. The switch 109 attempts to connect the call in the conventional manner and, through the network 106, the call is routed and connected to the telephone handset 130a in the conventional manner.

If a telephone call is made from the telephone handset 130a to the telephone handset 130b, the telephone handset 130a may use an abbreviated number, such as an extension number, to establish the call. The telephone handset 130a sends a call establishment request (204) to the network 106 containing the extension number of the telephone handset 130b. The switch 109 is configured to, upon receiving such a number, to forward the call request to the VPN service 112.

The VPN service 112 comprises a VPN network interface 116 which provides an interface between the switch 109 and VPN routing logic 114. In the present example the VPN network interface suitably uses the intelligent network application part (INAP) protocol. The VPN network interface 116 is also responsible for the complex handling of the call state machine running in the switch, as will be appreciated by those skilled in the art.

The switch 109 sends a call request (206) to the VPN network interface 116. The VPN network interface 116 forwards the call request (208) to the VPN routing logic 114. The VPN routing logic 114 interrogates (210) the SDP 110 and obtains the fully qualified telephone subscriber number corresponding to the dialed extension number. The VPN routing logic also obtains, from the SDP 110, the text string containing the name of the caller. The VPN routing logic 114 returns the obtained information to the VPN network interface 116 (212) which is configured to instruct the switch 109 how to handle the call (214). For instance, in the present example, the switch 109 is instructed to connect a call (216) to the obtained fully qualified telephone subscriber number, and to supply to that number the obtained text string representing the name of the caller to enable the handset 130b to display the name of the caller.

To enable this functionality the SDP 110 is provisioned (202) with, in addition to mapping data mapping a fully qualified telephone subscriber number to an abbreviated extension number, textual information of the name of the person allocated that number. The information is provisioned to the SDP 110 through an IT server 118 in an IT system 104, typically under the control of a designated VPN administrator. If any changes are made to the configuration of the VPN 132, such as extension numbers being added or removed, the VPN administrator has to suitably update the SDP to ensure the correct functioning of the VPN 132.

The information to be supplied to the SDP 110 is determined by the VPN service 112, depending on the functionality provided thereby. In the present example, the VPN service provides extension number dialing and caller name presentation. In order for the VPN 132 to function correctly, the local VPN administrator has to provision the SDP 110 with the appropriate information, such as extension number to fully qualified number mapping, and name information, in the format required by the VPN service 112.

One of the problems with such a VPN service is that the nature of the services provided by the VPN 132 is predefined by the operator of the VPN service 112. Since the VPN service 112 is part of the telephony network 106, the only control the local VPN administrator has is the provisioning of appropriate information to the SDP 110. Improved or enhanced functionality can only be provided if appropriate changes to the VPN service 112 are made. However, since the VPN service is not controlled by the local VPN administrator, there is little scope for personalization or modification of the VPN service. Furthermore, there is no way to enable, for example, the VPN service to access dynamically changing data, such as data from an electronic calendar provisioned from the IT system 104.

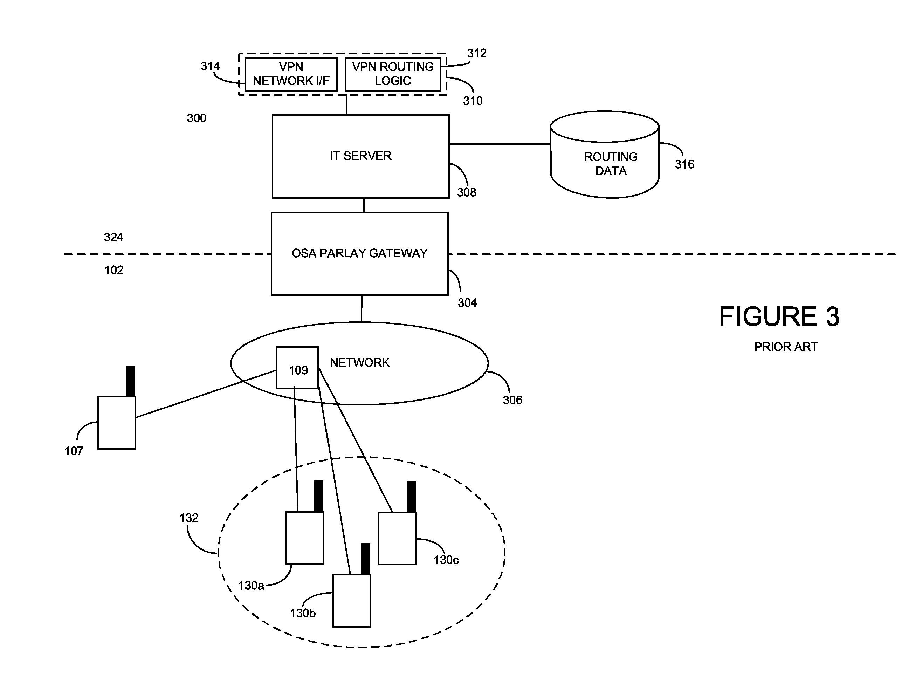

Referring now to Figure 3 there is shown a telephony system 300 which provides a virtual private telephony network 132 through use of OSA/PARLAY technology. As will be appreciated by those skilled in the art, OSA/PARLAY provides a series of application programming interfaces (APIs) which provide access to telecommunication network capabilities using IT applications. More information on Parlay can be obtained from the Parlay Group (www.parlay.org).

The overall functionality of the VPN 132 is substantially the same as the functionality provided by the VPN 132 of the system of Figure 1 described above. However, in the system 300 a VPN service 310 is provided as part of an IT system 324, rather than as part of the telephony network 106 as in the system 100 of Figure 1.

In the system 300 of Figure 3, when the telephone handset 130a makes a call (404) using an internal VPN extension number to the telephone handset 130b, the switch 109 receives a call routing request. The switch 109 is configured to request (406) resolution of the call request through an OSA/PARLAY gateway 304. The gateway 304 translates messages generated by the telephony network 306 to messages understandable by an IT server 308. The IT server 308 runs an appropriate telephony application (not shown) which provides the appropriate telephony functionality.

In the present example, the switch 109 requests, via the gateway 304, resolution of the dialed internal VPN extension number. The telephony application is configured to request (408) a VPN service 310 to resolve the call request. The VPN service 310 comprises a VPN network interface 314 and VPN routing logic 312. The VPN service 310 forwards (408) the call request to the VPN network interface 314, which in turn requests (410) VPN routing logic 312 to resolve the call request. The VPN routing logic 312 is configured to resolve the dialed extension number into a fully qualified telephone subscriber number and, where the caller is internal to the VPN 132, to obtain the name of the caller (412). The VPN routing logic 312 obtains this information from a routing data database 316, which it accesses through the IT server 308. The resolved fully qualified telephone subscriber is returned along with the caller name (412), to the VPN network interface 314 (414). The VPN network interface 314, through the gateway 304, appropriately instructs the switch 109 (418) to route the call to the resolved number and to provide the callee with the name of the caller to display on the callee's telephone handset.

One of the advantages of using an OSA/PARLAY approach is that the VPN service 310 and the routing data 316 are both located in the IT system 324 and controllable and configurable by the administrator of the VPN 132. In this way, if more advanced VPN functionality is required, such as dynamic call routing based on electronic calendar entries, such functionality can be added by the VPN administrator.

For example, the routing data database 316 can be modified to contain a main number and an alternative number, and the VPN routing logic 312 can be modified to interrogate an electronic calendar application prior to resolving an internal VPN extension number. Such an architecture offers a great deal of flexibility to the end user, and enables VPN administrators to offer new and innovative services in a shorter time frame than would be possible using the traditional VPN approach describer above in relation to Figure 1.

However, one downside of such an architecture is that the Parlay API transfers the operational complexity of telecommunication networks to the IT system meaning that IT developers wishing to use Parlay also have to be specialized in the operation of telecommunication networks.

A further disadvantage is that such a system relies extensively on IT systems for performing what may be considered to be conventional telecom network tasks, such as called party number resolution, and the like. Accordingly, if a problem occurs in the IT systems, which, as mentioned above, are unlikely to be high-availability systems, operation of the VPN could fail.

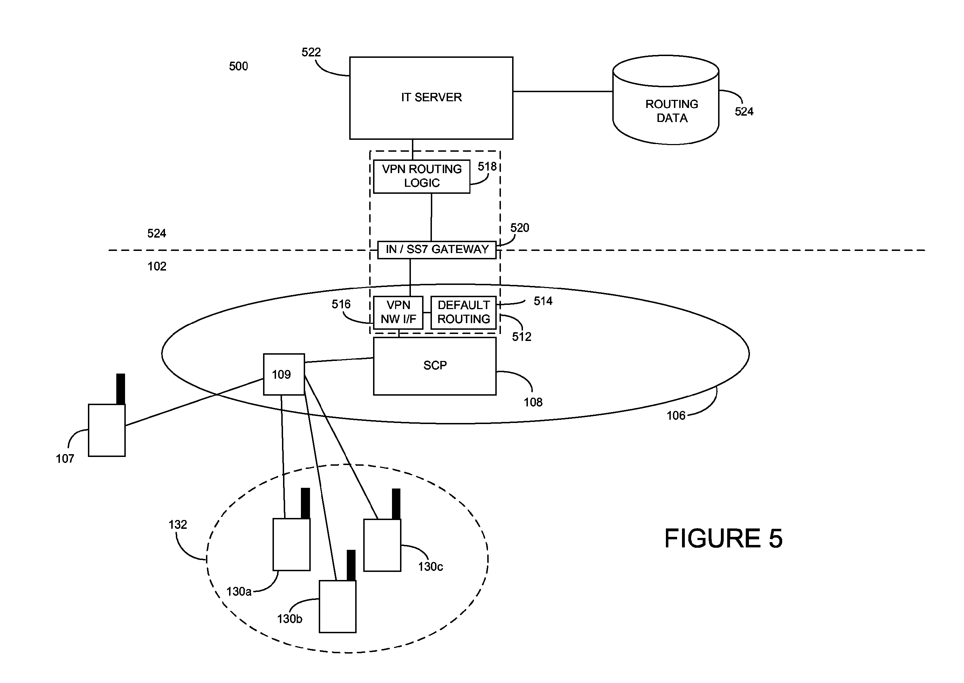

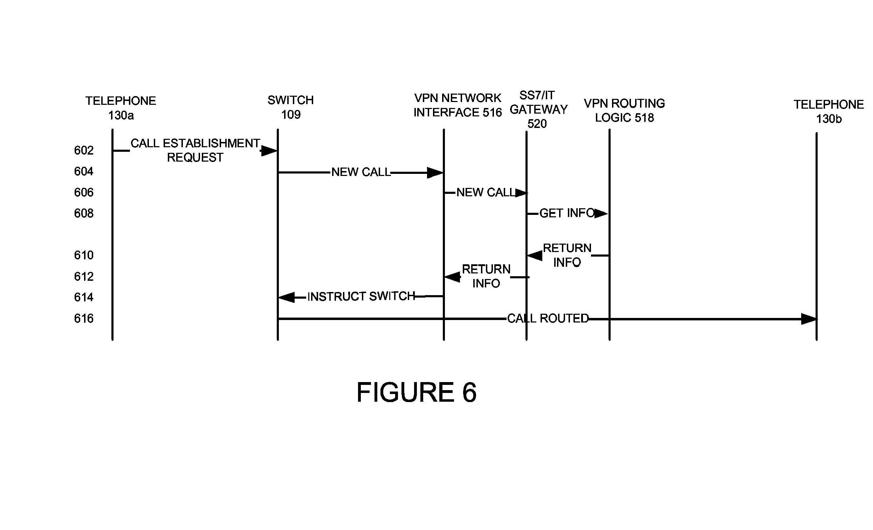

An embodiment of the present invention, providing similar functionality the VPN systems of Figures 1 and 3, is now described with reference to Figure 5 which is a simplified block diagram of a telephony system according to an embodiment of the present invention. Further reference is made to Figure 6, which is a simplified event flow diagram showing events occurring between different elements of the system of Figure 5.

In the system 500 of Figure 5, when the telephone handset 130a makes a call (602) using an internal VPN extension number to the telephone handset 130b, a call routing request (602) is sent to the switch 109. The switch 109 is configured to forward the call request (604) to a VPN service 512. The call request 604 is processed by a VPN network interface 516, located in the telephony network 106, of the VPN service 512 which forwards the request 604 to VPN routing logic 518 located in an IT system 524. Communication between the VPN network interface 516 and the VPN routing logic 518 is achieved through a gateway 520, such as an IT/SS7 gateway, which appropriately translates messages from the telecommunication network message set used by VPN network interface 516 and the IT-based message set used by the VPN routing logic 518.

The VPN routing logic 51 8 is configured to resolve the dialed extension number to a fully qualified telephone subscriber number and, where the caller and callee are internal to the VPN 132, to provide the callee handset with the name of the caller. The VPN routing logic 518 resolves (608) the extension number and obtains (608) the name of the caller using information stored in a routing data database 524, accessed through an IT server 522. The VPN routing logic 518 provides (612) the obtained information to the VPN network interface 516 and, via the gateway 520, instructs the switch 109 to route the call (618) and provide the obtained name to the called party handset.

In addition to the VPN routing logic 518, there is also provided a default routing module 514 which is located in the telephony network 106. The purpose of the default routing module 514 is to act as a backup routing module to the VPN routing logic 518. Periodically the VPN routing logic 518, through the gateway 520, updates the default routing module 514 with all or a part of the routing functionality provided by the VPN routing logic 518. In this way, should any of the VPN elements located in the IT system 524, such as the gateway 520, the VPN routing logic 518, the IT server 522 or the routing data database 524 fail, the VPN network interface 516 will still be able to route calls. Preferably, the default routing logic provides at least some basic routing, enabling at least a sub-set of the functionality provided by the VPN routing logic 518 to be provided.

In the present embodiment, as described above, the VPN network interface 516 and VPN routing logic 518 are separated, with the VPN network interface being located in the telephony network 106, and the VPN routing logic being located outside of the telephony network, such as in the IT system 524. There are a number of important advantages to such an architecture. One is that the VPN network interface 516, which is used to instruct the switch 109 how to route calls based on information supplied by the VPN routing logic 518, is provided by the telephony network 106, and therefore compatibility with other elements of the telephony network 106, such as the switch 109, are ensured. Furthermore, the VPN logic module 516 benefits from the high-availability provided inherently by the telephony network 106.

A further advantage is that the since the VPN routing logic is located in the IT system 524, this makes it possible for the VPN administrator to modify the routing logic to provide enhanced functionality. For example, if the VPN administrator wishes to add increased functionality to the VPN 132, this may be done in a simple manner, requiring only modification to the VPN routing logic 518 and/or the routing data database 524, both of which are located in the IT system 524 and modifiable without requiring extensive knowledge of telecommunication networks.

For example, the VPN service 132 may be easily modified to provide dynamic call routing based on information supplied from a calendar application. In this case, the calendar application may contain a fully qualified telephone subscriber number at which the callee may be contacted at various times during the day, such as a home number, a mobile telephone number, and an office number. Such information may be provisioned to the routing data database through the electronic calendar application or may available directly from the application.

When a call is made to a given extension number, the VPN routing logic is arranged to obtain the current contact telephone number for the callee, and to supply this information to the VPN network interface 516, thereby enabling the switch 109 to correctly route the call according to the information contained in the calendar application.

In this way, the user allocated the extension number can be reached via his extension number, without the caller having to know the exact location of the user at any given time.

## Claims

1. Apparatus for providing a virtually private telephony network VPN within a telecommunication network, the VPN being comprised of a group of telephone subscriber numbers of the telecommunication network, the telecommunication network comprising a network routing element configured for sending requests to route calls made to a telephone number corresponding to a subscriber number of the group to the apparatus, the apparatus comprising:
a network interface operable to receive routing requests from the network routing element,
a VPN routing logic module outside of the telecommunications network for resolving a routing request received from the network interface, and for supplying the network routing element, via the network interface, information sufficient for the network routing element to route the call.

2. Apparatus according to claim 1, wherein the VPN routing logic module is in an information technology IT system outside of the telecommunication network, the apparatus further comprising a gateway for translating messages sent between the telecommunication network and the IT system.

3. Apparatus according to claim 1 or 2, further comprising a default routing module in the telecommunication network operable to provide routing information to the network interface in the event that the VPN routing logic module is unable to provide routing information.

4. Apparatus according to claim 3, wherein the default routing module is arranged to be periodically updated with routing information from the VPN routing module, to thereby provide at least a subset of the routing functionality of the VPN routing module in the event that the VPN routing module is unable to provide routing information.

5. Apparatus according to any previous claim, further comprising a routing data database for providing routing data to the VPN routing logic module.

6. Apparatus according to any previous claim, further comprising a software application arranged to provide routing data to the VPN routing logic module.

7. Apparatus according to any previous claim, wherein the network interface is located within the telecommunication network.

8. Apparatus according to any previous claim, wherein the telecommunication network is a signaling system 7 SS7 based telecommunication network.

9. A method of operating a virtually private telephony network VPN within a telecommunication network, the VPN being comprised of a group of telephone subscriber numbers of the telecommunication network, the telecommunication network comprising a network routing element arranged for sending requests to route calls made to a telephone number corresponding to a subscriber number of the group to the apparatus, the method comprising:
receiving, via a network interface, routing requests from the network routing element,
sending to a VPN routing logic module outside of the telecommunications network a routing request received from the network interface, and
supplying, to the network routing element, via the network interface, information sufficient for the network routing element to route the call.

10. The method of claim 9, wherein the VPN routing logic module is in an information technology IT system outside of the telecommunication network, the method further comprising translating messages sent between the telecommunication network and the IT system.

11. The method of claim 9 or 10, further comprising determining whether the VPN routing logic is able to provide routing information, and where it is determined that it is not so able, sending the received routing request to a default routing module in the telecommunications network.

12. The method of claim 11, further comprising periodically updating the default routing module with at least a subset of information from the VPN routing logic module.

13. The method of any of claims 9 to 12, further comprising the VPN routing logic module obtaining routing information from a routing data database.

14. The method of any of claims 9 to 13, further comprising the VPN routing logic module obtaining routing information from a software application.

15. The method of any of claims 9 to 14, adapted for use where the network interface is located within the telecommunication network.

16. The method of any of claims 9 to 15, adapted for use where the telecommunication network is a signaling system 7 SS7 based telecommunication network.
